# NEW EUROPEAN PATENT SPECIFICATION

(11) **EP 0 482 936 B2**
(45) Date of publication and mention of the opposition decision: **04.11.1998**
(45) Mention of the grant of the patent: 16.08.1995
(21) Application number: 91309860.4
(22) Date of filing: 24.10.1991
(51) Int. Cl.: H01R 35/02, H02G 11/00, B60R 16/02

(54) **Structure for mounting an end support to a rotary connector**
Anordnung zur Befestigung einer Endhaltung an einem drehbaren Verbinder
Structure pour le montage d'un support d'extrémité à un connecteur rotatif

(30) Priority: 24.10.1990 JP 111241/90
(43) Date of publication of application: 29.04.1992
(73) Proprietor: THE FURUKAWA ELECTRIC CO., LTD., Tokyo 100 (JP)
(72) Inventor: Suzuki, Hironori, c/o The Furukawa Elec. Co., Ltd., Chiyoda-ku, Tokyo (JP); Miwa, Shigeru, c/o K. K. Tokai Rika Denki, Niwa-gun, Aichi (JP)
(74) Representative: Hague, Alison Jane

(56) References cited:
- EP-A- 0 243 047
- EP-A- 0 297 558
- EP-A- 0 401 028
- DE-A- 3 641 706
- US-A- 4 936 782

## Description

This invention relates to a rotary connector for connecting relatively rotatable members and having an end support fitted alongside an end portion of a flat cable.

Among various rotary connectors for connecting relatively rotatable members by a transmission line for transmitting an electrical signal, optical signal, or electric power, a rotary connector for an automotive air bag is known, for example.

In this type of rotary connector a spirally wound belt-like flat cable including a plurality of electrical conductors covered with an insulating material is arranged in an annular space defined by combined fixed and rotatable cases, with one end attached to the rotatable case and the other end attached to the fixed case. More specifically, the electrical conductors at each end of the flat cable are respectively connected to a plurality of external electric wires, the connected portions are molded using a synthetic resin, and the molded part is mounted on the respective cases.

By allowing the flat cable to loosen and tighten, this rotary connector permits the rotatable case to rotate relative to the fixed case by a predetermined number of turns.

In this rotary connector, when the rotatable case is rotated nearly to the limit of loosening or tightening of the flat cable, an end portion of the flat cable is bent due to the stress acting thereupon, and therefore, the flat cable may be broken at the bent portion after long use.

In conventional rotary connectors, therefore, an elastic tongue-shaped end support made of a synthetic resin is fitted along side, e.g. the inner end portion of the flat cable, to thereby lessen the stress acting on the inner end portion of the cable.

To facilitate mounting the end support, a slit is cut in the rotatable case, and one end of the end support is attached to the rotatable case, together with the molded part. Due to this structure, however, the rotatable case must be increased in size to provide space for the slit, and in order to ensure a predetermined number of rotations, a longer flat cable must be used.

The end portion of the end support may be bonded directly to an end of the flat cable by using an adhesive or a double-sided adhesive tape. In this case, however, if the strength of adhesion of the adhesive or the like to the end support is insufficient, the end support may be partly separated from the flat cable when the flat cable is wound up or rewound. If the end support is peeled off, the end support interferes with the flat cable and hinders smooth loosening and tightening of the flat cable, and the rotary connector becomes no longer serviceable.

EP-A-0243047 discloses a rotary connector in which an end support extends through a slit in a rotatable case at the inner end of a flat cable.

Viewed from one aspect the present invention provides a rotary connector which includes a rotatable case and a fixed case rotatably engaged with each other and having an axially facing inner wall surface, and a spirally wound flat cable housed in the fixed and rotatable cases and having one end engaged by the rotatable case and another end engaged by the fixed case, wherein an end support is mounted to at least one of the rotatable and fixed cases along side the flat cable, for preventing at least one of inner and outer end portions of the flat cable from being bent. The end support has a fixing portion integrally formed therewith, and the fixing portion is fixed to the axially facing inner wall surface of one of the rotatable and fixed cases to thereby fasten the end support to one of the rotatable and fixed cases.

According to a rotary connector of this invention, it is not necessary to use a over-sized rotatable case or fixed case, or to use a longer flat cable to obtain a predetermined number of rotations.

Further, the end support is fixed to the rotatable case or fixed case and prevents an end portion of the flat cable from being bent. Accordingly, the end support is not torn off by tightening or loosening of the flat cable when the rotary connector is used, and thus, a long-term stable operation of the rotary connector is ensured.

Embodiments of the invention will now be described, by way of example only, with reference to the accompanying drawings, wherein:-
FIG. 1 is a perspective view of a connector assembly, as one embodiment, for mounting an end support to a rotary connector according to one embodiment of this invention, illustrating how the connector is assembled; and
FIG. 2 is a perspective view of a principal part of a modified structure for mounting an end support.

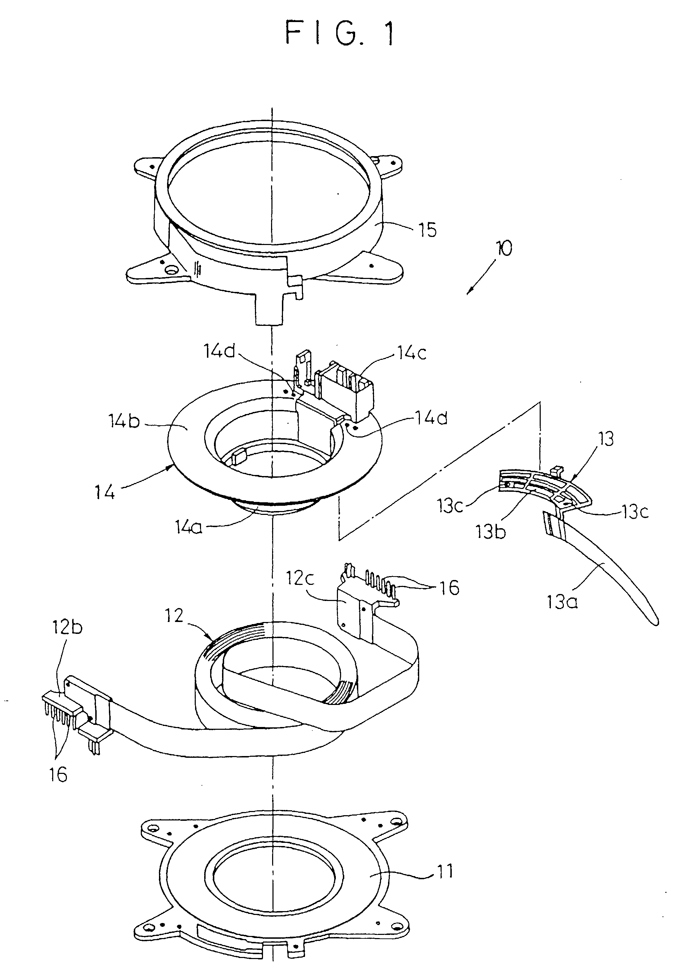

An embodiment of this invention will be described with reference to FIG. 1.

As shown in the figure, a rotary connector 10 comprises a base plate 11, a spirally wound flat cable 12, an end support 13, an inner cylindrical case 14, and an outer cylindrical case 15, which are put one upon the other in the order mentioned. The flat cable 12 is arranged in an annular space defined by the base plate 11 and the outer cylindrical case 15, which constitute a fixed case, and the inner cylindrical case 14 serving as a rotatable case, so that the flat cable 12 can wind tightly or loosely. Molded parts 12c and 12b are formed at inner and outer ends of the flat cable 12, respectively. A plurality of connection terminals 16, which are respectively connected at one end to electrical conductors, not shown, of the flat cable 12, project from each of the molded parts 12c and 12b.

This embodiment is characterized by a structure for mounting and fixing the end support 13, for example, to a lower surface of an upper flange 14b, mentioned later, of the inner cylindrical case 14. As shown in Fig. 1, the end support 13 has a tongue-shaped supporting portion 13a which is fitted along side an end portion of the flat cable 12, and a fixing portion 13b projecting outward from the supporting portion 13a in the form of a segmental flange. The supporting portion 13a and the fixing portion 13b are produced by molding a synthetic resin having elasticity into one piece.

The fixing portion 13b has an arcuate form corresponding to the shape of the upperflange 14b of the inner cylindrical case 14, and a rivet hole 13c is bored through an each end of the arcuate portion 13b.

The inner cylindrical case 14, which serves as the rotatable case, is a one-piece body having an inner cylindrical shaft 14a and the aforementioned upper flange 14b extending radially outward from the upper portion of the shaft 14a. Fixing holes 14d are bored through the upper flange 14b, for mounting and fixing a connecting part 14c and the fixing portion 13b.

The connecting part 14c serves to connect the inner end of the flat cable 12 to a connector connected to an external device. More specifically, the molded part 12c at the inner end of the flat cable 12 is fitted into the connecting part 14c from below, and the connection terminals 16 projecting from the molded part 12c are connected to the connector.

According to this invention, the end support 13 having the above-described configuration is fixed to the inner cylindrical case 14.

More specifically, the fixing portion 13b is abutted against the lower surface of the upper flange 14b, such that the rivet holes 13c are in alignment with corresponding ones of the fixing holes 14d, and then, the fixing portion 13b is rivetted to the upper flange 14b by rivets, not shown.

After the end support 13 is fixed to the inner cylindrical case 14 in this manner, the base plate 11, the flat cable 12, the inner cylindrical case 14, and the outer cylindrical case 15 are combined in the mentioned order, with the supporting portion 13a extended along the inner end portion of the flat cable 12.

The above-described structure for mounting the end support 13 can be used for existing inner cylindrical cases and does not call for any oversize, and thus, it is not necessary to use a longer flat cable.

Furthermore, since the end support 13 is rivetted at the fixing portion 13b to the lower surface of the upper flange 14b with rivets, it is not separated due to tightening or loosening of the flat cable 12 as the rotary connector 10 operates. Therefore, a long-term stable operation of the rotary connector 10 is ensured.

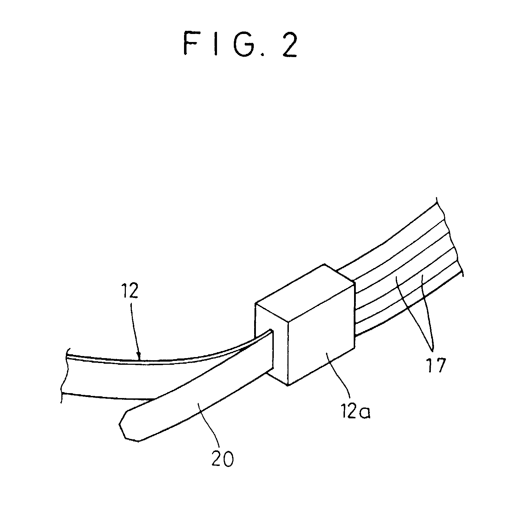

The end support may be modified as shown in FIG. 2, for example. This end support 20 is formed by molding integrally with a part 12a provided at the inner end of the flat cable 12. The molded part 12a is formed at a connecting portion at which electrical conductors (not shown) of the flat cable 12 are respectively connected to a plurality of lead wires 17, which are extended to outside of the case and connected to an unillustrated device.

In addition to aforesaid advantages, according to this structure, since the end support and the molded part form a single-piece body, incidental omission of the end support 20 during assembling of the rotary connector 10 can be prevented.

Thus, according to at least preferred embodiments, there is provided a highly reliable structure for mounting an end support to a rotary connector, which eliminates the need for a longer flat cable and which never hjnders smoooth loosening and tightening of the flat cable even after a long use.

## Claims

1. A rotary connector (10) comprising a rotatable case (14) and a fixed case (11,15) being rotatably engaged with each other and having an axially facing inner wall surface, and a spirally wound flat cable (12) housed in the fixed and rotatable cases and having one end engaged with the rotatable case and another end engaged with the fixed case, and an end support (13,20) being mounted to at least one of the rotatable and fixed cases alongside the flat cable, for preventing at least one of inner and outer end portions of the flat cable from being bent, characterised by a fixing portion (13b,12a) integrally formed with the end support, the fixing portion being fixed on the axially facing inner wall surface of one of the rotatable and fixed cases to thereby fasten the end support to one of the rotatable and fixed cases.

2. A rotary connector according to claim 1, wherein said fixing portion (13b,12a) extends from one end portion of the end support (13) in the form of a segmental flange, and has a plurality of rivet holes (13c) through which rivets are passed for fixing the end support on the axially facing inner wall surface of one of the rotatable and fixed cases (14; 11,15).

## Patentansprüche

1. Drehverbinder (10), umfassend ein drehbares Gehäuse (14) und ein festes Gehäuse (11, 15), die miteinander in drehendem Eingriff stehen und eine axial weisende Innenwandfläche aufweisen, und ein spiralig gewundenes Flachkabel (12), das in den festen und drehbaren Gehäusen aufgenommen ist und dessen eines Ende mit dem drehbaren Gehäuse in Eingriff steht und dessen anderes Ende mit dem festen Gehäuse in Eingriff steht, und eine Endstütze (13, 20), die an wenigstens einem der drehbaren und festen Gehäuse entlang dem Flachkabel angebracht ist, um ein Verbiegen wenigstens eines innerer und äußerer Endabschnitte des Flachkabels zu verhindern,
gekennzeichnet durch
einen mit der Endstütze einstückig geformten Befestigungsabschnitt (13b, 12a), wobei der Befestigungsabschnitt an der axial weisenden Innenwandfläche eines der drehbaren und festen Gehäuse befestigt ist, um hierdurch die Endstütze an einem der drehbaren und festen Gehäuse zu befestigen.

2. Drehverbinder nach Anspruch 1, in dem der Befestigungsabschnitt (13b, 12a) von einem Endabschnitt der Endstütze (13) in Form eines segmentförmigen Flansches absteht und eine Mehrzahl von Nietlöchern (13c) aufweist, durch die Nieten hindurchtreten, um die Endstütze an der axial weisenden Innenwandfläche eines der drehbaren und festen Gehäuse (14; 11, 15) zu befestigen.

## Revendications

1. Connecteur rotatif (10) comprenant un boîtier rotatif (14) et un boîtier fixe (11, 15) coopérant de manière rotative l'un avec l'autre et ayant une surface de paroi intérieure faisant face axialement, et un câble (12) plat enroulé en spirale logé dans les boîtiers rotatifs et fixe et ayant une extrémité coopérant avec le boîtier rotatif et une autre extrémité coopérant avec le boîtier fixe, et un support d'extrémité (13, 20) étant monté sur au moins un des boîtiers fixe et rotatif le long d'un câble plat, pour empêcher au moins l'une des portions d'extrémités interne et externe du câble plat d'être pliée, caractérisé par une portion de fixation (13b, 12a) formé d'une pièce avec le support d'extrémité, la portion de fixation étant fixée sur la paroi de surface intérieure faisant face axialement de l'un des boîtiers fixe et rotatif pour ainsi fixer le support d'extrémité à l'un des boîtiers fixe et rotatif.

2. Connecteur rotatif selon la revendication 1, dans lequel ladite portion de fixation (13b, 12a) s'étend depuis une portion d'extrémité du support d'extrémité (13) sous la forme d'une bride segmentaire, et a une pluralité de trous de rivets (13c) à travers lesquels des rivets sont passés pour fixer le support d'extrémité sur la surface de paroi intérieure faisant face axialement de l'un des boîtiers fixe et rotatif (14;11,15).
